# EUROPEAN PATENT SPECIFICATION

(11) **EP 3 286 385 B1**
(45) Date of publication and mention of the grant of the patent: **20.08.2025**
(21) Application number: 16783501.6
(22) Date of filing: 21.04.2016
(51) Int. Cl.: E04B 1/61, E04B 2/02, E04C 3/12, F16B 5/00, E04B 1/10, F16B 5/07

(54) **WALL SYSTEM**
WANDSYSTEM
SYSTÈME DE PAROI

(30) Priority: 24.04.2015 SE 1500204
(43) Date of publication of application: 28.02.2018
(73) Proprietor: Isotimber Holding AB (publ), 831 48 Östersund (SE)
(72) Inventor: ÖSTLING, Mikael, 835 93 Alsen (SE)
(74) Representative: AWA Sweden AB
(86) International application number: PCT/SE2016/050349
(87) International publication number: WO 2016/171611

(56) References cited:
- WO-A1-02/052108
- WO-A1-2011/090418
- GB-A- 709 112
- US-A- 2 661 511
- US-A- 3 589 755
- US-A1- 2006 090 611
- US-A1- 2007 154 257

## Description

### Technical domain

The present invention relates to a variant of a wall system in accordance with the claims.

### Technical background

Over the years building structures have been developed in a large number of different variants and embodiments. One problem in connection with the construction of buildings is that these structures are time-consuming to erect and complete. In order to reduce the time spent on building work, buildings consisting of prefabricated components such as different types of prefabricated walls and other structural parts have been developed. The prefabricated structures consist of standardised components which reduce the time spent at the building site. However, these structures predominately relate to entire wall sections and not partial sections.

A variant for more quickly erecting walls in smaller buildings is, for example, for the walls to consist of wall blocks which are put together to form walls during the construction of the building. A problem with erecting walls comprising a number of wall blocks that are connected to each other is the problem of making the walls straight both in the vertical and in the horizontal direction. At present it is difficult to achieve this in an effective manner.

There exists a need for an improved system of erecting walls in a rapid and reliable manner as well as reducing or eliminating the aforementioned problems at the same time.

### Prior art

A variant of a wall structure is described in patent specification WO2011090418. The structure comprises parts which consist of at least a first set of grooves with intermediate flanges.

The structure differs from the examined structure as it does not include corresponding connection elements as are in the present patent application. For example, the structure in accordance with the patent specification is not a system of wall blocks which are connected to each other with connection elements in accordance with the present patent application.

A variant of a connection element for modular wall structures is described in patent specification N0323784. The wall structure differs to a considerable extent from the structure in accordance with the present patent application. For example, the structure in accordance with the patent specification does not comprise a system of wall blocks which are connected to each other with connection elements in a manner corresponding with the present patent application.

### Summary of the invention

The aim of the present patent application is to eliminate or substantially reduce one of the problems of existing types of modular wall structures set out above or in the following description. In relation to known structures the invention intends to provide a solution for being able to rapidly put together the parts of the wall as the same time as the wall being straight. This aim is achieved with a system according to the claims.

In accordance with the invention a wall system for building structures according to independent claim 1 is provided which comprises a plurality of structural elements which are to be connected to each other with at least one connection device and preferably several connection devices characterised in that the structural elements are connected to each other in an overlapping manner in order to make quicker and straighter wall construction possible. The connection devices comprise at least one first type of connection element and at least one second type of connection element, wherein the shapes of the first and second connection element are coordinated so that they can be connected to and disconnected from each other. According to one embodiment the first connection element comprises a female component and the second connection a male component or vice versa. According to one embodiment the first connection element comprises at least one first V-shaped element and the second connection element a second V-shaped element.

According to one embodiment of the wall system it is characterised in that the system comprises at least one first layer of structural elements and at least one second layer of structural elements.

According to one embodiment of the wall system it is characterised in that the system comprises said plurality of structural elements of two or more different sizes and/or shapes.

According to one embodiment of the wall system it is characterised in that said plurality of connection elements is distributed over each of the sides of the structural element in order to allow overlapping mounting of said structural element.

According to the invention, the structural element has at least one first side, at least one second side and at least one first edge, at least one first opposite edge and at least one second edge and at least one second opposite edge.

According to one embodiment of the wall system at least one of the connection elements is connected to the wall element in recesses. According to one embodiment of the wall system it comprises at least one first layer of wall blocks and at least one second layer of wall blocks.

### Brief description of the drawings

The present invention will be described in more detail below with reference to the attached schematic drawings which show as an example the presently preferred embodiment of the invention.
Figure 1 shows an example of an embodiment of the wall system with connected structural elements in accordance with the present invention.
Figures 2A and 2C show side views and figure 2B show a view from the front of an example of a structural element, an essentially rectangular-shaped wall element, in accordance an embodiment of the invention.
Figure 3 shows parts of a cross-section of a structural element, a wall element, in accordance with an embodiment of the invention.
Figure 4 shows an example of a connection device with the connection elements joined together.

### Description of preferred embodiments

With reference to the figures, a wall system 1 in accordance with the present patent application will be described in more detail. In the present patent application a method of using the wall system is also described.

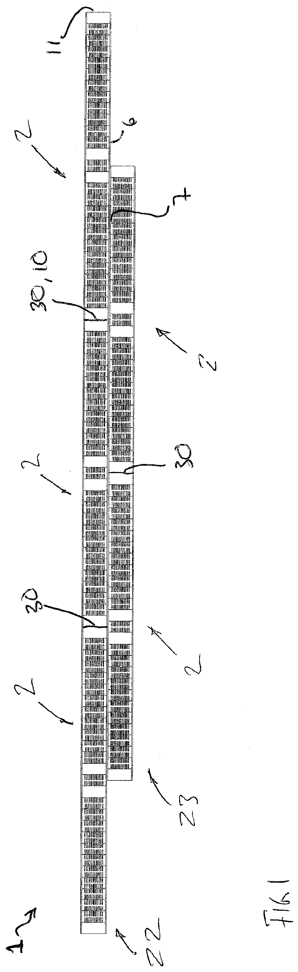

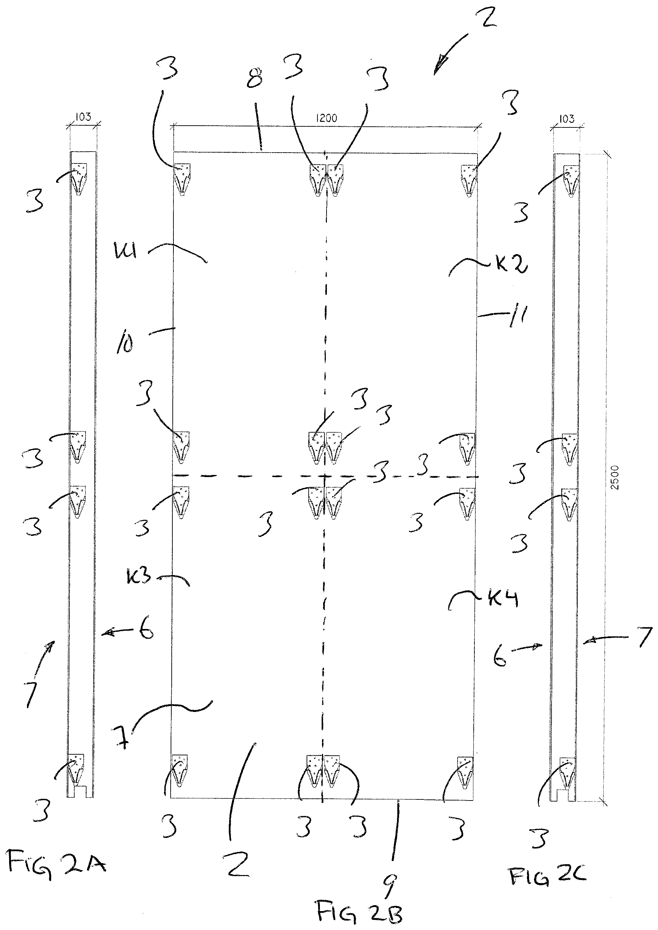

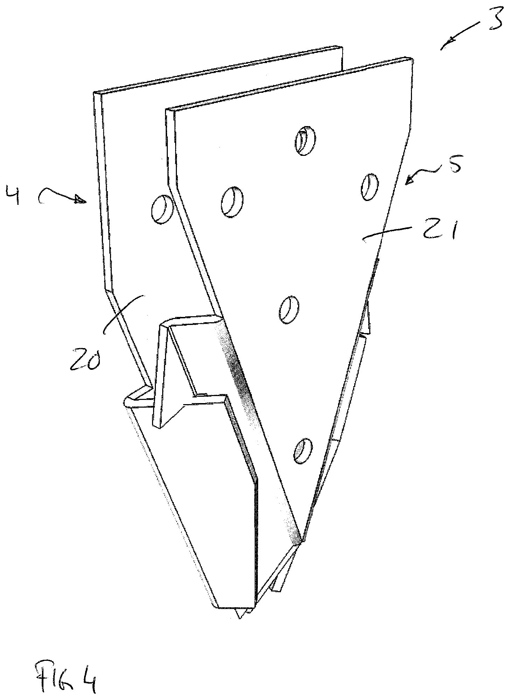

With reference to figure 1, which shows a cross-sectional view from above of a wall system 1 in accordance with one embodiment of the invention, the wall system 1 comprises a plurality of structural elements 2, such as wall blocks or equivalent. The structural elements 2 are joined together by means of at least one connection device 3 and preferably several connection devices 3, which are not visible in figure 1, but which are described in more detail below with reference to figure 2 and figure 4. In accordance with one embodiment of the wall system, the plurality of structural elements 2 when connected together form a first layer 22 of the structural element and a second layer 23 of the structural element. Each layer 22, 23 comprises a plurality of adjoining structural elements which are joined together in joints 30 between side edges 10, 11, 8, 9 of the adjacent structural elements, see fig. 2B. The structural elements 2 in the respective layers 22 and 23 are in turn connected together so that sides 6, 7 of the structural elements, see figs. 2A - 2C forming part of the different layers 22, 23 which face each other and preferably adjoin each other, are connected with a mutual offset in the vertical and/or horizontal direction in order to achieve that the structural elements in respective layers 22, 23 are preferably arranged in an overlapping manner, i.e. over each other's joints. The connection devices 3 comprise at least one first connection element 4 and at last one second connection element 5. In an exemplifying embodiment the first connection element 4 comprises a female component and the second connection 5 a male component or vice versa.

The size and shape of the structural element 2, such as the wall element, can vary within the framework of the present concept of the invention. The wall system 1 can in use comprise structural elements 2 of one size. In alternative embodiments of the wall system it comprises two or more different sizes of structural elements 2, these being the most common embodiments.

An examplifying embodiment of the structural element 2 is shown in more detail in figure 2B, view from the front, and 2A and 2C, side views. In the examplifying embodiment the structural element 2 is formed of wall elements which are connected to each other and form a wall. In other embodiments it is however conceivable for the structural elements to be used in parts of buildings other than walls.

In the examplifying embodiment of the building element 2, which is based on a wall element, it has an essentially rectangular or square shape comprising a first side 6 and a second side 7. The structural element has lateral edge, i.e. at least a first edge 8 with a first opposite edge 9 and a third edge 10 with an opposite edge 11. The structural element 2 in figure 2 has a plurality of connecting elements 3 arranged on lateral edges 10, 11 and on the first side 7 for connection to adjacent structural elements. Structural elements 3 are distributed on the sides and lateral edges of the structural element in order to support a modular method of construction, wherein a second structural element with complementary connection elements arranged at corresponding positions on its own sides and lateral edges can be advantageously and simply connected to the structural element 2.

The connection elements 3 are here distributed on side 7 in order to provide connection points for another structural element which is offset in the horizontal and vertical direction in that a respective connection element 3 is placed in corner points of each imaginary quadrant K1 - K4 (broken line in figure 2B) of side 7. This placement of connection elements 3 allows overlapping mounting of side 6 of another structural element with complementary connection elements 3, overlapping quadrant K1, K2, K3 or K4, overlapping K1 + K2, K1 + K3, K3 + K4 or K2 + K4. In the examplifying embodiment the connection elements are distributed to support the mounting of another structural element on structural element 2 side-by-side (corresponding sides 6 and 7 on two structural elements) in an overlapping manner as described above, edge-to-edge (corresponding edges 10 and 11 on two structural elements) for constructing a layer, and edge to side (for example edge 10 mounted at right angles on side 7 of two structural elements) for assembling a wall system/layer at right angles to the surface.

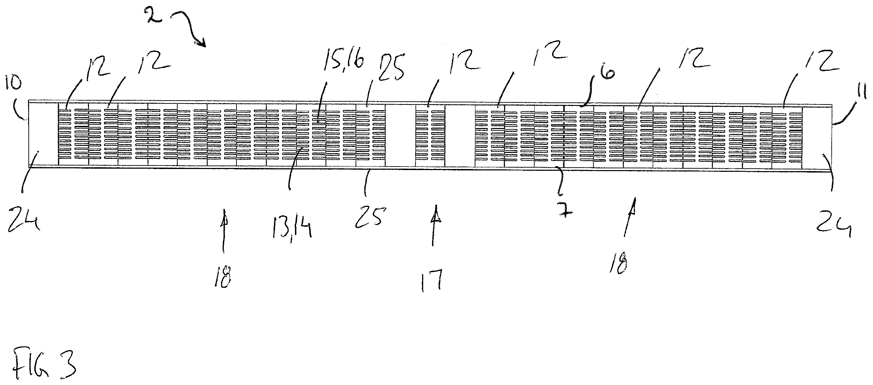

According to one embodiment of the wall system, as shown in figure 3, the structural element 2 comprises one or more core elements 12. In the embodiment shown in the figures the structure comprises a plurality of core elements 12.

In the examplifying embodiment the core element has an essentially quadrilateral shape but in alternative embodiments it can be of a different shape that is suitable for the application. The core element can be shaped as in variants described in patent specification WO2011090418 ("core element" pages 3-8, figures 1-6).

The core element 12 in accordance with the exemplifying embodiment thus comprises one at least one of its sides a first plurality of grooves 12 with an intervening first plurality of flanges 14 and also on at least one other side another set of grooves 15 with an intermediate second plurality of flanges 16. In other embodiments further sides of the core element 12 can comprise at least one groove and in yet other embodiments a fourth side also comprises at least one groove (said groove is not shown in the figures). In the examplifying embodiment the structure comprises at least one edge section 24 at each edge and at least one material layer 25 on each side 6 and 7.

In the figures the structural element 2 has in its transverse direction at least one middle section 17 each with its own side section 18. The middle section comprises at least one core element 12. In the examplifying embodiment each side section 18 has eleven core elements (in the figures 11 core elements are shown in one direction but a lesser number in the other direction). The number of core elements 12 in the middle section 17 and core elements each of the side sections 18 can vary within the context of the concept of the invention. The number of core elements in the middle section can thus be more than one and the number of core elements in the side sections can be more than eleven or fewer than eleven.

The wall element is preferably used so that the core elements are positioned vertically, or essentially vertically when in use.

According to one embodiment of the wall system at least one of the connection elements 4 and 5 is connected to the wall element 2 (structural element) in a recess (not shown), cavity or similar. The structure means that the wall element's edges or layer of the wall element can lie against each other. The wall element can have recesses in the edges and sides of the wall element.

With reference to figure 4, an embodiment of the first connection element 4 is shown in more detail. The first connection element 4 comprises a V-shaped element 20 or similar or an essentially V-shaped element, part or equivalent. In figure 4 it is also shown that the second connection element 5 comprises a V-shaped element 21, part or similar or an essentially V-shaped part or element. In the examplifying embodiment the V-shaped element 20 comprises a female component and the V-shaped element 21 a male component.

The first V-shaped element 20 and in the first connection element 4 and the second V-shaped element 21 and the second connection element 5 have shapes which are coordinated, meaning that they can be connected to and disconnected from each other. The shapes of the V-shaped elements 20 and 21 means that they are mutually regulated when they are connected together. This means that the wall elements connected thereto are automatically mutually adjusted. The structure also has the advantage the assembly can take place rapidly.

With reference to figure 1 it is shown how a first structural element 2 such as a wall block and a second structural element such as a second wall block are joined together with the aid of the connection element (not shown in figure 1). Through the use of the system a first layer 22 and at least one second layer 23 are formed for example. In alternative embodiments at least one third layer of structural elements 2 such as wall blocks can be used. In the figure it is shown how the first layer 22 of wall blocks and the second layer 23 of wall blocks have been mutually offset at least in one direction. Preferably the first layer 22 and the second layer 23 of structural elements 2, such as wall blocks are offset in the horizontal direction of the structural elements 2, such as wall blocks (when these have been assembled to form a wall). In alternative embodiments it is conceivable that the structural element 2, such as the wall block, is also offset in a vertical, or essentially vertical, direction. In further alternative embodiments the structural element 2, such as a wall block, is only offset in the vertical, or essentially vertical, direction.

In the detailed description of the present invention the structural details that are evident to a person skilled in the art can be left out. Such evident structural details are included to the extent required for satisfactory functioning of the present invention to be achieved. For example, components are included to the extent required for satisfactory functioning of the structure in accordance with the present patent application to be achieved.

Even though certain preferred embodiments have been described in detail, variants and modifications within the framework of the invention will be evident to a person skilled in the field to which the invention relates and all these are considered to be within the framework of subsequent claims. It is thus conceivable for the present invention to be used for purposes and applications other than those set out in the patent application.

## Claims

1. A building wall system (1) comprising a plurality of wall elements (2), at least one connection device, wherein the wall elements are to be connected to each other by means of said at least one connection device (3) to form a building wall, wherein the wall elements (2) are arranged to be connected to each other in an overlapping manner, and wherein the at least one connection device comprises at least one first type of connection element (4) and at least one second type of connection element (5), wherein the shapes of the first and second connection elements are coordinated so that they can be connected to and disconnected from each other, and wherein each respective wall element comprises a plurality of core elements (12), wherein at least one side of each core element is provided with a first plurality of grooves (13) with an intervening first plurality of flanges (14), and wherein at least one other side of each core element comprises another plurality of grooves (15) and a second plurality of flanges (16), and wherein each wall element comprises a first side (6), a second side (7), a first edge (8), a first opposite edge (9), a second edge (10), and a second opposite edge (11), wherein each side of each wall element comprises a material layer (25), **characterized in that** each edge of each wall element comprises an edge section (24).

2. The building wall system (1) in accordance with any one of the preceding claims, wherein at least one of the first and second types of connection elements (4, 5) is connected to the wall element (2) in recesses.

3. The building wall system (1) according to any one of the preceding claims, wherein the system comprises a first layer of wall elements and a second layer of wall elements, wherein wall elements of one layer cover joints between wall elements of the other layer.

4. The building wall system according to any one of the preceding claims, wherein said plurality of wall elements comprises wall elements of two or more different sizes and/or shapes.

5. The building wall system according to any one of the preceding claims, wherein said at least one connection element constitutes a plurality of connection elements distributed over the sides of each of the wall elements in order to allow overlapping mounting of said wall elements.

6. The building wall system according to any one of the preceding claims, wherein the first type of connection element (4) comprises a female component and the second type of connection element (5) comprises a male component and vice versa.

7. The building wall system according to any one of the preceding claims, wherein the first type of connection element (4) comprises a first V-shaped element (20), and the second type of connection element (5) comprises a second V-shaped element (21).

## Patentansprüche

1. Gebäudewandsystem (1), umfassend eine Vielzahl von Wandelementen (2), mindestens eine Verbindungsvorrichtung, wobei die Wandelemente mittels der mindestens einen Verbindungsvorrichtung (3) zum Bilden einer Gebäudewand miteinander zu verbinden sind, wobei die Wandelemente (2) dazu angeordnet sind, überlappend miteinander verbunden zu werden, und wobei die mindestens eine Verbindungsvorrichtung mindestens eine erste Art von Verbindungselement (4) und mindestens eine zweite Art von Verbindungselement (5) umfasst, wobei die Formen des ersten und des zweiten Verbindungselements so koordiniert sind, dass sie miteinander verbunden und voneinander getrennt werden können, und wobei jedes jeweilige Wandelement eine Vielzahl von Kernelementen (12) umfasst, wobei mindestens eine Seite jedes Kernelements mit einer ersten Vielzahl von Nuten (13) mit einer dazwischenliegenden ersten Vielzahl von Flanschen (14) versehen ist und wobei mindestens eine andere Seite jedes Kernelements eine weitere Vielzahl von Nuten (15) und eine zweite Vielzahl von Flanschen (16) umfasst und wobei jedes Wandelement eine erste Seite (6), eine zweite Seite (7), einen ersten Rand (8), einen ersten gegenüberliegenden Rand (9), einen zweiten Rand (10) und einen zweiten gegenüberliegenden Rand (11) umfasst, wobei jede Seite jedes Wandelements eine Materialschicht (25) umfasst, **dadurch gekennzeichnet, dass** jeder Rand jedes Wandelements einen Randabschnitt (24) umfasst.

2. Gebäudewandsystem (1) nach einem der vorhergehenden Ansprüche, wobei mindestens eines der ersten und der zweiten Art von Verbindungselementen (4, 5) mit dem Wandelement (2) in Aussparungen verbunden ist.

3. Gebäudewandsystem (1) nach einem der vorhergehenden Ansprüche, wobei das System eine erste Schicht von Wandelementen und eine zweite Schicht von Wandelementen umfasst, wobei Wandelemente einer Schicht Verbindungsstellen zwischen Wandelementen der anderen Schicht abdecken.

4. Gebäudewandsystem nach einem der vorhergehenden Ansprüche, wobei die Vielzahl von Wandelementen Wandelemente mit zwei oder mehr unterschiedlichen Größen und/oder Formen umfassen.

5. Gebäudewandsystem nach einem der vorhergehenden Ansprüche, wobei das mindestens eine Verbindungselement eine Vielzahl von Verbindungselementen darstellt, die über die Seiten jedes der Wandelemente verteilt sind, um eine überlappende Montage der Wandelemente zu gestatten.

6. Gebäudewandsystem nach einem der vorhergehenden Ansprüche, wobei die erste Art von Verbindungselement (4) eine weibliche Komponente umfasst und die zweite Art von Verbindungselement (5) eine männliche Komponente umfasst und umgekehrt.

7. Gebäudewandsystem nach einem der vorhergehenden Ansprüche, wobei die erste Art von Verbindungselement (4) ein erstes V-förmiges Element (20) umfasst und die zweite Art von Verbindungselement (5) ein zweites V-förmiges Element (21) umfasst.

## Revendications

1. Système de mur de bâtiment (1) comprenant une pluralité d'éléments de mur (2), au moins un dispositif de raccordement, les éléments de mur devant être raccordés les uns aux autres au moyen dudit au moins un dispositif de raccordement (3) pour former un mur de bâtiment, les éléments de mur (2) étant conçus pour être raccordés les uns aux autres de manière à se chevaucher, et l'au moins un dispositif de raccordement comprenant au moins un premier type d'élément de raccordement (4) et au moins un deuxième type d'élément de raccordement (5), les formes du premier et du deuxième élément de raccordement étant coordonnées de manière à ce qu'ils puissent être raccordés l'un à l'autre et séparés l'un de l'autre, et chaque élément de mur respectif comprenant une pluralité d'éléments de noyau (12), au moins un côté de chaque élément de noyau étant pourvu d'une première pluralité de rainures (13) avec une première pluralité de saillies intermédiaires (14), et au moins un autre côté de chaque élément de noyau comprenant une autre pluralité de rainures (15) et une seconde pluralité de saillies (16), et chaque élément de mur comprenant un premier côté (6), un second côté (7), un premier bord (8), un premier bord opposé (9), un second bord (10) et un second bord opposé (11), chaque côté de chaque élément de mur comprenant une couche de matériau (25), **caractérisé en ce que** chaque bord de chaque élément de mur comprend une section de bord (24).

2. Système de mur de bâtiment (1) selon l'une quelconque des revendications précédentes, dans lequel au moins l'un des premier et deuxième types d'éléments de raccordement (4, 5) est relié à l'élément de mur (2) dans des évidements.

3. Système de mur de bâtiment (1) selon l'une quelconque des revendications précédentes, dans lequel le système comprend une première couche d'éléments de mur et une seconde couche d'éléments de mur, dans lequel les éléments de mur d'une couche recouvrent des joints entre les éléments de mur de l'autre couche.

4. Système de mur de bâtiment selon l'une quelconque des revendications précédentes, dans lequel ladite pluralité d'éléments de mur comprend des éléments de mur de deux tailles et/ou formes différentes ou plus.

5. Système de mur de bâtiment selon l'une quelconque des revendications précédentes, dans lequel ledit au moins un élément de raccordement constitue une pluralité d'éléments de raccordement répartis sur les côtés de chacun des éléments de mur afin de permettre un montage en chevauchement desdits éléments de mur.

6. Système de mur de bâtiment selon l'une quelconque des revendications précédentes, dans lequel le premier type d'élément de raccordement (4) comprend un composant femelle et le second type d'élément de raccordement (5) comprend un composant mâle et vice versa.

7. Système de mur de bâtiment selon l'une quelconque des revendications précédentes, dans lequel le premier type d'élément de raccordement (4) comprend un premier élément en forme de V (20), et le second type d'élément de raccordement (5) comprend un second élément en forme de V (21) .
